# EUROPEAN PATENT SPECIFICATION

(11) **EP 1 770 554 B1**
(45) Date of publication and mention of the grant of the patent: **19.12.2018**
(21) Application number: 06018456.1
(22) Date of filing: 04.09.2006
(51) Int. Cl.: G06F 17/30

(54) **Image analysis apparatus and image analysis program storage medium**
Apparat und Speichermedium zur Bildanalyse
Appareil et moyen de stockage pour l'analyse d'images

(30) Priority: 28.09.2005 JP 2005282138
(43) Date of publication of application: 04.04.2007
(73) Proprietor: FUJIFILM Corporation, Minato-ku Tokyo (JP)
(72) Inventor: Ebihara, Takayuki, Ashigarakami-gun, Kanagawa 258-8538 (JP)
(74) Representative: Klunker IP Patentanwälte PartG mbB

(56) References cited:
- WO-A-01/37131
- US-A1- 2003 113 017
- US-B1- 6 408 301

## Description

### BACKGROUND OF THE INVENTION

### Field of the Invention

The invention relates to an image analysis apparatus that analyzes an image and an image analysis program storage medium in which an image analysis program is stored.

### Description of the Related Art

It has become common practice to search vast amounts of information stored in databases for information relating to keywords inputted by users on the Internet and in the field of information search systems. In such information search systems are applied a method is used in which a text portion of each piece of information stored in databases is searched for a character string that matches an input keyword to retrieve information containing that matched character string and the like. By using such an input-keyword-based search system, users can quickly retrieve only information they need from tremendous amounts of information.

Besides search for character strings that match input keywords, search for images relating to input keywords has come into use in recent years. One known method for searching images uses face recognition or scene analysis that has been widely used (for example see Japanese Patent Laid-Open No. 2004-62605) to analyze patterns of images and retrieve images providing analytical results that match features of an image that is associated with an input keyword. According to this technique, a user can readily retrieve an image that can be associated with an input keyword from a vast number of images simply by specifying the input keyword. A problem with this technique is that it takes a vast amount of time because face recognition or scene analysis must be performed for each of a vast quantity of images.

In this regard, Japanese Patent Laid-OpenNo. 2004-157623 discloses a technique in which images and words relating to the images are associated with each other and registered in a database beforehand and the words in the database are searched for a word that matches an input keyword to retrieve images associated with the matching word. According to the technique disclosed in Japanese Patent Laid-Open No. 2004-157623, images relating to an input keyword can be quickly retrieved. However, this technique has a problem that it costs much labor because human operators must figure out words relating to each of a vast quantity of images and manually associates those words with the images.

Japanese Patent Laid-Open No. 2005-107931 describes a technique in which words that are likely to relate to an image are automatically extracted from information including images and text on the basis of the content of the text and a word that matches an input keyword is found in the extracted words .

However, the technique described in the Japanese Patent Laid-Open No. 2005-107931 has a problem that it cannot extract words relating to images if information does not includes text and, consequently, cannot find an image. Therefore, there is demand for the development of a technique that automatically determines a keyword for an image on the basis of the image itself.

US 2003/0113017 A1 discloses process for the automatic creation of a database of images accessible by semantic features. In the process, starting from a base image, a segmentation module serves to segment the image into uniform components. There is a vade-mecum, i.e. a dictionary containing thumbnail images of ordinary individual objects together with their contexts. An image explorer serves for each of objects revealed by the segmentation module to recognize the object so as to be able to name it, i.e. for each object, the image explorer receives an entire thumbnail image file of the objects and it cooperates with the vade-mecum so that the image explorer outputs a list of concepts which are recognized as being candidates after making comparisons with the vade-mecum. A color, texture and/or location analysis may be performed for the each object.

### SUMMARY OF THE INVENTION

The invention has been made in view of the above circumstances and provides an image analysis apparatus and an image analysis program that analyze an image and automatically determine words relating to the image, and an image analysis program storage medium on which the image analysis program is stored.

An image analysis apparatus according to the invention includes: an acquiring section which acquires an image; an element analyzing section which analyzes the content of the image acquired by the acquiring section to extract a plurality of constituent elements that constitute the image; a storage section which associates and stores a plurality of words with each of a plurality of constituent elements; a search section which searches the words stored in the storage section for words associated with a constituent element for each of the plurality of constituent elements extracted by the element extracting section; characterized by a scene analysis section which analyses an image acquired by the acquiring section to determine the scene of the image;
and a selecting section which selects words relating to the scene determined through analysis by the scene analysis section from among words found by the search section, wherein the scene of the image is selected from a group comprising a scene taken during the daytime, outdoors (natural landscape and land), outdoors (natural landscape and man-made structure), outdoors (natural landscape and sea) and indoors.

According to the image analysis apparatus of the invention, multiple words are associated with and stored with each of constituent elements and, when an image is acquired, constituent elements constituting the image are extracted and a word associated with the extracted constituent elements are retrieved from among multiple words stored. Thus, the labor of manually checking each image to figure out words relating to the image can be eliminated and appropriate words relating to the image can be automatically obtained on the basis of the image itself. Because the scene of an image is determined by analysis and words relating to the scene are selected, the words that are suitable for the content of the image can be efficiently obtained.

Preferably, the element analyzing section in the image analysis apparatus of the invention extracts graphical elements as the constituent elements.

The element analyzing section of the invention may analyze the colors of an image to extract color elements, for example. The element analyzing section holds the promise of the ability to extract the shape of a subject in each image by analyzing graphical elements of the image and find words suitable for the subject in the image.

In a preferable mode of the image analysis apparatus of the invention, the element analyzing section extracts a plurality of constituent elements and the search section searches for words for each of the plurality of constituent elements extracted by the element analyzing section; the image analysis apparatus further includes a selecting section which determines that words that match the result of an image analysis are among words found by the search section.

According to the image analysis apparatus in this preferable mode of the invention, words that better representing features of an image can be selected.

In another preferable mode of the image analysis apparatus of the invention, the acquiring section acquires an image to which information is attached; the element analyzing section extracts multiple constituent elements; the search section searches for words for each of the multiple constituent elements extracted by the element extracting section; and the image analysis apparatus includes a selecting section which selects words relating to the information attached to an image acquired by the acquiring section from among the words found by the search section.

Today, various kinds of information such as information about the location where a photograph is taken or information about the position of a person in an angle field of view are sometimes attached to a photograph during taking the photograph of a subject. By using these items of information for word selection, words suitable for an image can be precisely selected.

An image analysis program storage medium of the invention stores an image analysis program executed on a computer to configure on the computer: an acquiring section which acquires an image; an element analyzing section which analyzes the content of the image acquired by the acquiring section to extract a plurality of constituent elements that constitute the image; a search section which searches the words stored in the storage section which associates and stores a plurality of words with each of a plurality of constituent elements for words associated with a constituent element for each of the plurality of constituent elements extracted by the element analyzing section; characterized in that the image analysis program is executed to further construct: a scene analysis section which analyses an image acquired by the acquiring section to determine the scene of the image; and a selecting section which selects words relating to the scene determined through analysis by the scene analysis section from among words found by the search section, wherein the scene of the image is selected from a group comprising a scene taken during the daytime, outdoors (natural landscape and land), outdoors (natural landscape and man-made structure), outdoors (natural landscape and sea) and indoors.

The image analysis program storage medium of the invention may be a mass storage medium such as a CD-R, CD-RW, or MO as well as a hard disk.

While only a basic mode of the image analysis program storage medium will be given herein in order to simply avoid overlaps, implementations of the image analysis program storage medium as referred to the invention include, in addition to the basic mode described above, various implementations that correspond to the modes of the image analysis apparatus described above.

Furthermore, the sections such as the acquiring section configured on a computer system by the image analysis program of the invention may be such that one section is implemented by one program module or multiple section are implemented by one program module. These sections may be implemented as elements that executes operations by themselves or may be implemented as elements that direct another program or program modules included in the computer system to execute operations .

According to the invention, an image analysis apparatus and image analysis program storage medium that analyze an image to automatically determine words relating to the image can be provided.

### BRIEF DESCRIPTION OF THE DRAWINGS

Fig. 1 is a perspective view of a personal computer forming an image analysis apparatus of an embodiment of the invention;
Fig. 2 shows a hardware configuration of a personal computer shown in Fig. 1;
Fig. 3 is a conceptual diagram of a CD-ROM 210 which is one embodiment of the image analysis program storage medium according to the invention;
Fig. 4 is a functional block diagram of the image analysis apparatus 400;
Fig. 5 is a flowchart showing a process flow for analyzing an image to determine keywords relating to the image; and
Fig. 6 is a diagram illustrating a process of analyzing an image.

### DETAILED DESCRIPTION OF THE INVENTION

Exemplary embodiments of the invention will be described with reference to the accompanying drawings.

An image analysis apparatus according to an embodiment analyzes an image and automatically obtains words relating to the image. The words obtained are associated with and stored with the image in a location such as a database and used in a search system that searches for an image relating to an input keyword from among a vast number of images stored in the database.

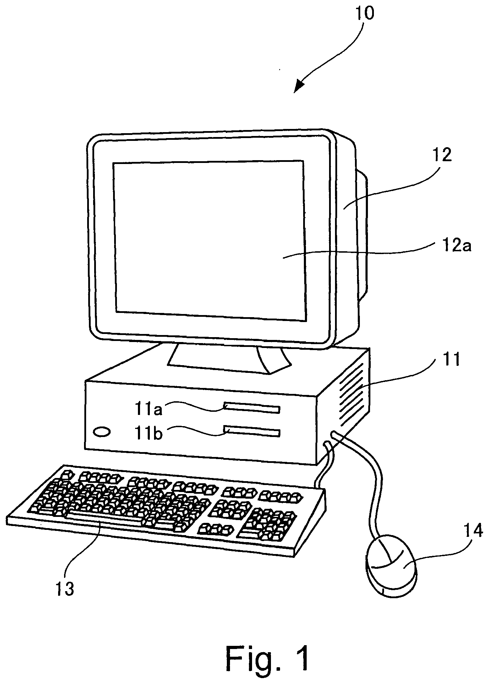

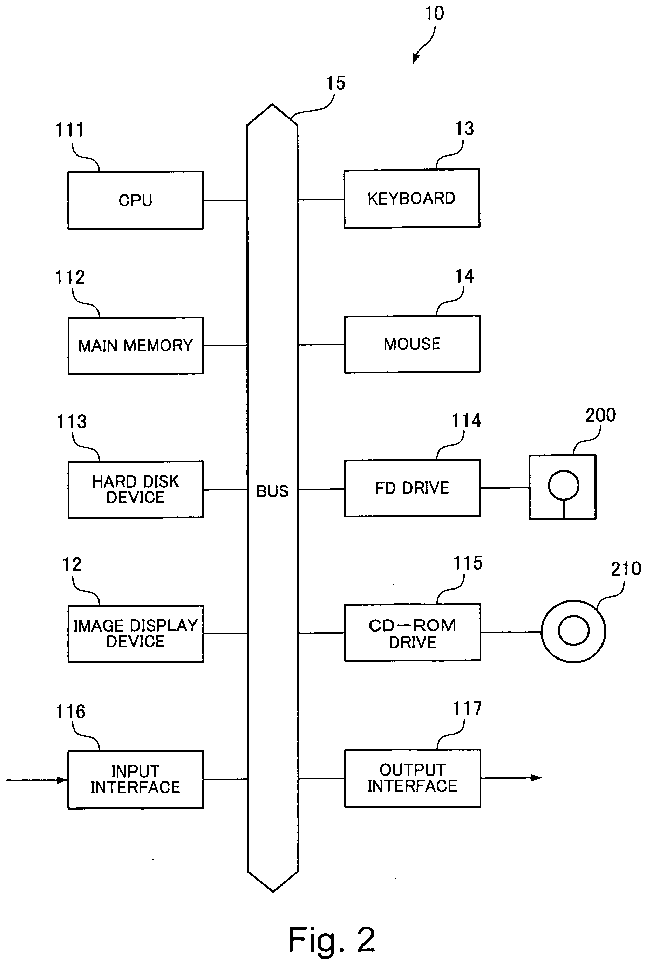

Fig. 1 is a perspective view of a personal computer which forms an image analysis apparatus of an embodiment of the invention and Fig. 2 shows a hardware configuration of the personal computer.

The personal computer 10, viewed from the outside, includes a main system 11, an image display device 12 which displays images on a display screen 12a in accordance with instructions from the main system 11, a keyboard 13 which inputs various kinds of information into the main system 11 in response to keying operations, and a mouse 14 which inputs an instruction associated with an icon, for example an icon, displayed in a position which is pointed on the display screen 12a. The main system 11, viewed from the outside, has a flexible disk slot 11a for loading a flexible disk (hereinafter abbreviated as a FD) and a CD-ROM slot 11b for loading a CD-ROM.

As shown in Fig. 2, in the main system 11 are included a CPU 111 which executes various programs, a main memory 112 into which a program is read and loaded from a hard disk device 113 and is developed to be executed by the CPU 111, the hard disk device 113 in which various programs and data are stored, an FD drive 114 which accesses an FD 200 loaded in it, a CD-ROM drive 115 which accesses a CD-ROM 210, an input interface 116 which receives various kinds of data from external devices, and an output interface 117 which sends various kinds of data to external devices. These components and the image display device 12, the keyboard 13, and the mouse 14, also shown in Fig. 2, are interconnected through a bus 15.

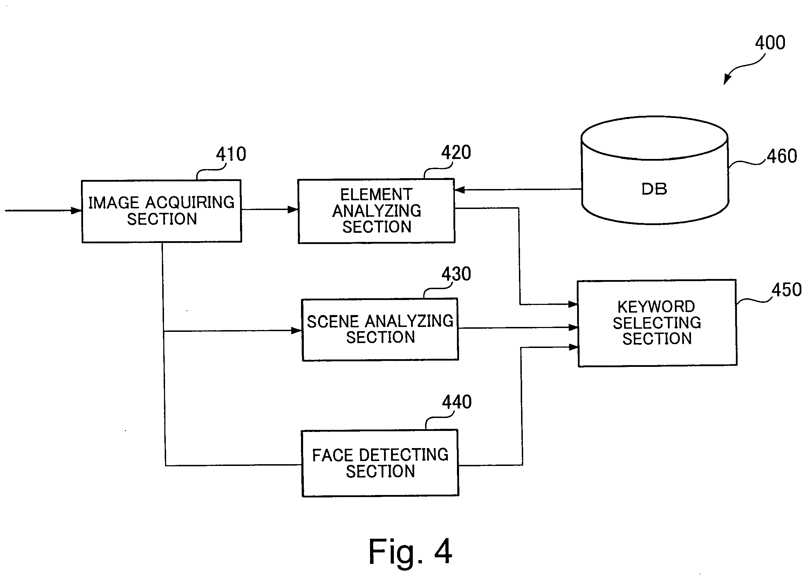

In the CD-ROM 210 is stored an image analysis program which is an embodiment of the image analysis program of the invention. The CD-ROM 210 is loaded in the CD-ROM drive 115 and the image analysis program stored on the CD-ROM 210 is uploaded into the personal computer 10 and is stored in the hard disk device 113. The image analysis program is then started and executed to construct an image analysis apparatus 400 (see Fig. 4) which is an embodiment of the image analysis apparatus according to the invention in the personal computer 10.

The image analysis program executed in the personal computer 10 will be described below.

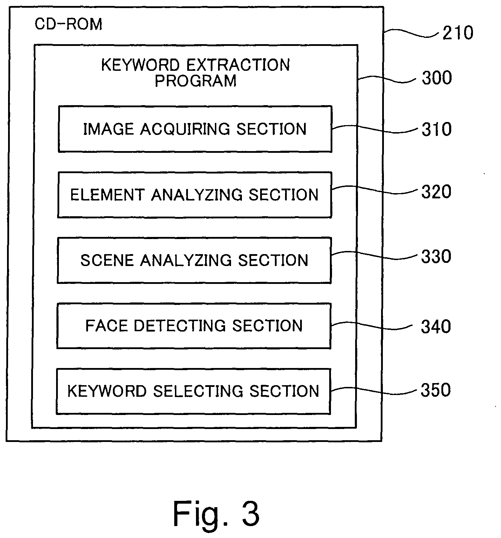

Fig. 3 is a conceptual diagram showing a CD-ROM 210 which is an embodiment of the image analysis program storage medium of the invention.

The image analysis program 300 includes an image acquiring section 310, an element analyzing section 320, a scene analyzing section 330, a face detecting section 340, and a keyword selecting section 350. Details of these sections of the image analysis program 300 will be described in conjunction with operations of the sections of the image analysis apparatus 400.

While the CD-ROM 210 is illustrated in Fig. 3 as the storage medium storing the image analysis program, the image analysis program storage medium of the invention is not limited to a CD-ROM. The storage medium may be any other medium such as an optical disk, MO, FD, and magnetic tape. Alternatively, the image analysis program of the invention may be supplied directly to the computer over a communication network without using a storage medium.

Fig. 4 is a functional block diagram of the image analysis apparatus 400 that is configured in the personal computer 10 shown in Fig. 1 when the image analysis program 300 is installed in the personal computer 10.

The image analysis apparatus 400 shown in Fig. 4 includes an image acquiring section 410, an element analyzing section 420, a scene analyzing section 430, a face detecting section 440, a keyword selecting section 450, and a database (hereinafter abbreviated as DB) 460. When the image analysis program 300 shown in Fig. 3 is installed in the personal computer 10 shown in Fig. 1, the image acquiring section 310 of the image analysis program 300 implements the image acquiring section 410 shown in Fig. 4. Similarly, the element analyzing section 320 implements the element analyzing section 420, the scene analyzing section 330 implements the scene analyzing section 430, the face detecting section 340 implements the face detecting section 440, and the keyword selecting section 350 implements the keyword selecting section 450.

The hard disc device 113 shown in Fig. 2 acts as the DB 460. Stored beforehand in the DB 460 is an association table that associates features of elements constituting images with words representing candidate objects having the features (candidate keywords). The DB 460 represents an example of a storage section as referred to in the invention.

Table 1 shows an example of the association table stored in the DB 460.

**[Table 1]**

| Feature | Type | | Candidate keyword | Characteristic color |
|---|---|---|---|---|
| Triangle | Natural landscape | Land | Mountain | Green |
| | Man-made structure | | Pyramid | Mud yellow |
| | Food | | Rice ball | White, black |
| Circle | Natural landscape | Sky | Moon | White, yellow, orange |
| | Artifact | Small article | Coin | Gold, silver, copper |
| | | Ornament | Button | Any color |
| | | Indoors | Wall clock | Any color |
| | Face | | Eyes | Black, blue |
| | | | Nose | Skin color |
| Horizontal straight line | Natural landscape | Land | Land horizon | - |
| | | Sea | Sea horizon | - |
| | Artifact | Indoors, outdoors | Partition | - |
| | | Indoors | Desk | - |
| Curve in corner | Natural landscape | Sea | Coastline | - |
| | Artifact | Indoors | Shadow of cushion | - |
| | Animal | | Shadow of animal | - |
| ⋮ | ⋮ | ⋮ | ⋮ | ⋮ |

The association table shown in Table 1 is prepared by a user beforehand. In the association table shown in Table 1, features (such as triangle, circle, horizontal straight line, and curve in corner) of elements making up images are associated with candidate keywords suggested by the features (such as mountain, pyramid, and rice ball) and characteristic colors of the objects represented by the candidate keywords (such as green and mud yellow). Furthermore, the candidate keywords of each feature are categorized into types (such as natural landscape-land, natural landscape-sky, natural landscape-sea, man-made structure, and food) . In the example shown in Table 1, the feature "triangle" is associated with the candidate keywords such as "mountain", "pyramid", and "rice ball" that a user associates with the triangle. The color and type of the object represented by each candidate keyword are determined by the user and used for preparing the association table shown in Table 1. In Table 1, the feature "triangle" is associated with the candidate keyword "mountain" which is categorized as the type "natural landscape-land" and with the characteristic color "green". The feature "triangle" is also associated with the candidate keyword "pyramid" categorized as the type "man-made structure" and the characteristic color "mud yellow", and is also associated with the candidate keyword "rice ball" categorized as the type "food" and the characteristic colors "white" and "black" . It should be noted that in practice the association table contains other features such as "rectangle", "vertical straight line", and "circular curve" and candidate keywords associated with the features, in addition to the items shown in Table 1.

The image acquiring section 410 shown in Fig. 4 acquires an image through the input interface 116 shown in Fig. 2. The image acquiring section 410 represents an example of an acquiring section as referred to in the invention. The image obtained is provided to the scene analyzing section 430 and the face detecting section 440. The image acquiring section 410 extracts contours from the image, approximates the each of the contours to a geometrical figure to transform the original image into a geometrical image, and provides the resultant image to the element analyzing section 420.

The element analyzing section 420 treats the figures constituting an image provided from the image acquiring section 410 as constituent elements, finds a feature that matches that of each constituent element from among the features of elements (such as triangle, circle, horizontal straight line, and curve in corner) contained in Table 1, and retrieves the candidate keywords associated with the feature that matches. The element analyzing section 420 represents an example of an element extracting section as referred to in the invention and corresponds to an example of the search section according to the invention. The candidate keywords retrieved are provided to the keyword selecting section 450.

The scene analyzing section 430 analyzes the characteristics such as the hues of an image provided from the image acquiring section 410 to determine the scene of the image. The scene analyzing section 430 represents an example of a scene analyzing section as referred to in the invention. The result of the analysis is provided to the keyword selecting section 450.

The face detecting section 440 detects whether an image provided from the image acquiring section 410 includes a human face. The result of the detection is provided to the keyword selecting section 450.

The keyword selecting section 450 determines that candidate keywords that match the result of analysis provided from the scene analyzing section 430 and the result of the detection provided from the face detecting section 440 are the keywords of an image among the candidate keywords provided from the element analyzing section 420. The keyword selecting section **450** represents an example of a selecting section as referred to in the invention.

The image analysis apparatus 400 is configured as described above.

How a keyword is determined in the image analyzing apparatus 400 will be detailed below.

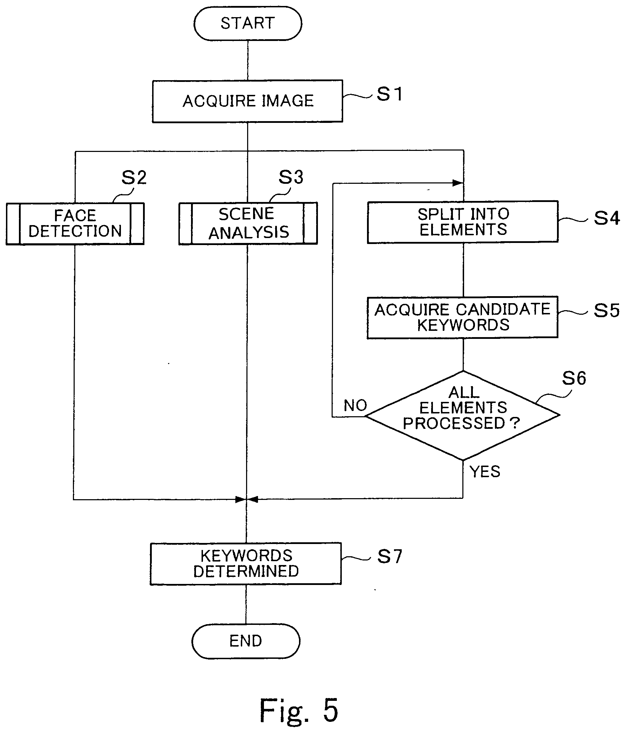

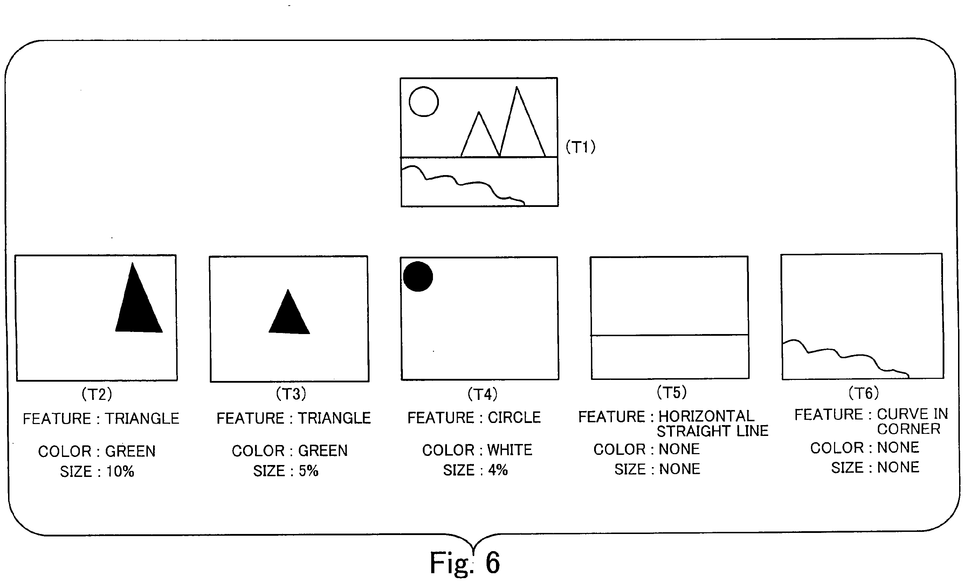

Fig. 5 is a flowchart showing a process flow for analyzing an image to determine keywords relating to the image. Fig. 6 is a diagram illustrating a process of analyzing the image. The following description will be provided with reference to Fig. 4 and Table 1 in addition to Figs. 5 and 6.

An image inputted from an external device is acquired by the image acquiring section 410 shown in Fig. 4 (step S1 in Fig. 5) and is then provided to the face detecting section 440 and the scene analyzing section 430. Contours are extracted from the image acquired by the image acquiring section 410 and each of the extracted contours is approximated to a geometrical figure and the color of each of the regions defined by the contours is uniformly changed to the median color of the colors contained in the region. As a result, the image is processed into a geometrical image as shown in Part (T1) of Fig. 6. The processed image is provided to the element analyzing section 420.

The face detecting section 440 analyzes the components of a skin color in the image provided from the image acquiring section 410 to detect a person region that contains a human face in the image (step S2 in Fig. 5) . It is assumed in the description of this example that the image does not contain a person. The technique for detecting a human face is widely used in the conventional art and therefore further description of which will be omitted herein. The result of detection is provided to the keyword selecting section 450.

The scene analyzing section 430 analyzes characteristics such as hues of the image provided from the image acquiring section 410 to determine the scene of the image (step S3 in Fig. 5). A method such as the one described in Japanese Patent Laid-Open No. 2004-62605 can be used for the scene analysis. The technique is well known and therefore further description of which will be omitted herein. It is assumed in the description of the example that analysis of the image shown in Part (T1) of Fig. 6 shows that the image can be of a scene taken during the daytime, with a probability of 80%, and outdoors, with a probability of 70%. The result of the scene analysis is provided to the keyword selecting section 450.

The element analyzing section 420, on the other hand, obtains the candidate keywords relating to the image provided from the image acquiring section 410.

First, the geometrical figures obtained as a result of approximation of the contours at step S1 in Fig. 5 are used to identify multiple constituent elements in the image (step S4 in Fig. 5). In this example, five constituent elements shown in Parts (T2), (T3), (T4), (T5), and (T6) of Fig. 6 are identified in the image shown in Part (T1) of Fig. 6.

Then, candidate keywords associated with the feature of each constituent element are obtained (step S5 in Fig. 5) . The candidate keywords are obtained as follows.

First, the size of each constituent element is analyzed and a geometrical feature and color of the constituent element are obtained. At this point in time, if the size of a constituent element is less than or equal to a predetermined value, the object represented by the constituent element is likely to be an unimportant object and therefore acquisition of keywords relating to that constituent element is discontinued. The assumption in this example is that analysis of the constituent element shown in Part (T2) of Fig. 6 shows that the geometrical feature is "triangle", the size is "10%", and the color is "green"; analysis of the constituent element shown in Part (T3) shows that the geometrical feature is "triangle", the size is "5%", and the color is "green"; analysis of the constituent element shown in Part (T4) shows that the geometrical feature is "circle", the size is "4%", and the color is "white"; analysis of the constituent element shown in Part (T5) shows that the geometrical feature is "horizontal straight line", the size is "not applicable", and the color is "not applicable"; and analysis of the constituent element shown in Part (T6) shows that the geometrical feature is "curve in corner", the size is "not applicable", and the color is "not applicable".

Then, the column "Feature" of the association table in Table 1 stored in the DB 460 is searched for a feature that matches the geometrical feature of each constituent element and the candidate keywords associated with the found feature are retrieved.

Table 2 shows a table that lists items extracted from the association table shown in Table 1 that correspond to the candidate keywords obtained for each constituent element.

**[Table 2]**

| Constituent element | Type | | Candidate keyword | Characteristic color |
|---|---|---|---|---|
| T2 | Natural landscape | Land | Mountain | Green |
| | Man-made structure | | Pyramid | Mud yellow |
| | Food | | Rice ball | White, black |
| T3 | Natural landscape | Land | Mountain | Green |
| | Man-made structure | | Pyramid | Mud yellow |
| | Food | | Rice ball | White, black |
| T4 | Natural landscape | Sky | Moon | White, yellow, orange |
| | Artifact | Small article | Coin | Gold, silver, copper |
| | | Ornament | Button | Any color |
| | | Indoors | Wall clock | Any color |
| | Face | | Eyes | Black, blue |
| | | | Nose | Skin color |
| T5 | Natural landscape | Land | Land horizon | - |
| | | Sea | Sea horizon | - |
| | Artifact | Indoors, outdoors | Partition | - |
| | | Indoors | Desk | |
| T6 | Natural landscape | Sea | Coastline | - |
| | Artifact | Indoors | Shadow of cushion | - |
| | Animal | | Shadow of animal | - |

For the constituent element shown in Part (T2) of Fig. 6, the items associated with the feature of element "triangle" are extracted from the association table in Table 1 as shown in Table 2 because the geometrical feature of the element is "triangle"; for the constituent element shown in Part (T3), also items associated with feature of element "triangle" are extracted from the association table in Table 1; for the constituent element shown in Part (T4), the items associated with the feature of element "circle" are extracted from the association table in Table 1; for the constituent element shown in Part (T5), the items associated with the feature of element "horizontal straight line" are extracted from the association table in Table 1; and for the constituent element shown in Part (T6), the items associated with the feature of element "curve in corner" are extracted from the association table in Table 1.

As described above, the process is performed on the entire image in which the image is split into constituent elements (step S4 in Fig. 5), candidate keywords for the constituent elements are obtained (step S5 in Fig. 5), and Table 2 is extracted from Table 1. After Table 2 is extracted for all regions of the image (step S6 in Fig. 5: YES), the extracted information in Table 2 is provided to the keyword selecting section 450 in Fig. 4.

The keyword selecting section 450 determines that the keyword of the image candidate keywords that are suitable to the photographed scene provided from the scene analyzing section 430 (step S7 in Fig. 5) are among the candidate keywords shown in Table 2. The keywords are selected from the candidate keywords as follows.

For selecting keywords, a number of photographed scenes are imagined by a user and priorities representing their relevance to the scenes are assigned beforehand to the types listed in Table 1. For example, for a scene "outdoors (natural landscape - land)", priorities are assigned to the types as follows: (1) type "natural scene - land", (2) type "natural landscape - sea", and (3) type "animal". For a scene "outdoors (natural landscape + man-made structure)", priorities are assigned to the types as follows: (1) type "man-made structure", (2) type "natural landscape - land", and (3) type "animal". For a scene "indoors", priorities are assigned to the types as follows: (1) type "artifact - indoors", (2) type "food", and (3) type "artifact - outdoors".

The keyword selecting section 450 first retrieves candidate keywords listed in Table 2 one by one for each constituent element of each scene in the order of descending priorities and classifies the obtained candidate keywords as the keywords for the scene. If the face detecting section 440 detects that an image contains a person, the keyword selecting section 450 uses information about the person region provided from the face detecting section 440 to determine which constituent element contains the person and changes the keyword pf the image of a constituent element found to contain the person to the keyword "person".

Table 3 is a table that lists keywords classified by scene.

**[Table 3]**

| Scene | Candidate keyword |
|---|---|
| Outdoors (natural landscape - land) | Mountain, moon, land horizon, coastline |
| Outdoors (man-made structure + natural landscape) | Pyramid, moon, land horizon, shadow of animal |
| Indoors | Rice ball, wall clock, desk, shadow of cushion |
| ⋮ | ⋮ |

In Table 3, the keywords "mountain", "moon", "land horizon", and "coastline" are listed as the keywords for the scene "outdoors (natural landscape - land); the keywords "pyramid", "moon", "land horizon", "shadow of animal" are listed as the keywords for the scene "outdoors (man-made structure + natural landscape); the keywords "rice ball", "wall clock", "desk", and "shadow of cushion" are listed as the keywords for the scene "indoors". In addition to these scenes, other scenes such as "outdoors (natural landscape - sea)" that prioritize candidate keywords relating to the sea, such as "sea horizon" and "coastline", may be provided.

After the keywords are classified by scene, determination is made as to which of the photographed scenes matches the color of each constituent element or the scene determined as a result of analysis by the scene analyzing section 430, and the keywords of the scene determined are selected as the keywords for the image. Because the analysis at step S3 of Fig. 5 in this example has determined the photographed scenes and their probabilities as "daytime: 80%" and "outdoors: 70%", it is determined that the scene "indoors" does not match the photographed scene. In addition, because the color of the constituent elements shown in Parts (T2) and (T3) of Fig. 6 is "green" and the characteristic color for the keyword "mountain" for those constituent elements of the scene "outdoor (natural landscape - land)" is "green" and the characteristics color for the keyword "pyramid" for those constituent elements is "mud yellow" in the scene "outdoors (man-made structure + natural landscape), it is determined that the scene "outdoors (natural landscape - land) " is best match to the photographed scene. Consequently, the keywords "mountain", "moon", "land horizon", and "coastline" of the scene "outdoors (natural landscape - land)" are selected as the keywords of the image. The selected keywords are associated with and stored with the image in the database.

As has been described, the image analysis apparatus 400 of the present embodiment automatically selects keywords on the basis of images, thus saving the labor of manually assigning keywords to the images.

Up to this point, the first embodiment of the invention has been described. A second embodiment of the invention will be described next. The second embodiment of the invention has a configuration approximately the same as that of the first embodiment. Therefore like elements are labeled with like reference numerals, the description of which will be omitted and only the differences from the first embodiment will be described.

An image analysis apparatus according to the second embodiment has a configuration approximately the same as that of the image analysis apparatus shown in Fig. 4, except that the image analysis apparatus of the second embodiment does not include the scene analysis section 430 nor the face detecting section 440.

Cameras containing a GPS (Global Positioning System) which detects their current position have come into use in recent years. In such a camera, positional information indicating the location where a photograph of a subject is taken is attached to the photograph. On the other hand, a technique has been devised in which a through-image is used to detect a person before a photograph of the subject is taken and autofocusing is performed in action on the region in the angle field of view where the person is detected in order to ensure that the person, a relevant subject, is brought into focus. Person information indicating the region of a photograph that contains the image of the person is attached to the photograph taken with such a camera. In the image analysis apparatus according to the second embodiment, an image acquiring section 410 acquires photographs to which shooting information such as the brightness of a subject and information indicating whether a flashlight is used or not as well as photographs to which positional information mentioned above is attached and photographs to which person information is attached. A keyword selecting section 450 selects keywords for photographs on the basis of these various items of information attached to the photographs.

In the image analysis apparatus according to the second embodiment, the face detection at step S2 of Fig. 5 and the scene analysis at step S3 are not performed. The rest of the process is similar to that in the image analysis apparatus 400 of the first embodiment. After an image is acquired (step S1 in Fig. 5), multiple constituent elements in the image are identified by an element analyzing section 420 (step S4 in Fig. 5) and candidate keywords for each of the constituent elements are obtained (step S5 in Fig. 5) . After the candidate keywords for all constituent elements are obtained (step S6 in Fig. 5: Yes), the keywords are classified by scene.

Furthermore, in the image analysis apparatus of the second embodiment, a constituent element that includes a person is detected in a photograph on the basis of person information attached to the photograph and, among the keywords classified by scene, the keyword of the detected constituent element is changed to the keyword "person". As a result, scenes as shown in Table 3 are associated with keywords as in the image analysis apparatus 400 of the first embodiment.

In the description of the second embodiment that follows, it is assumed that positional information indicating the rough locations of tourist spots are associated with candidate keywords representing the tourist spots, such as the names of landmark structures or mountains such as Mt. Fuji, instead of the items of information in the association table of Table 1. It is assumed in the description of this example that the candidate keyword "pyramid" shown in Table 1 is associated with positional information indicating the rough locations of a pyramid.

The keyword selecting section 450 compares positional information attached to a photograph that indicates the location where the photograph is taken with the rough positional information associated with a candidate keyword, "pyramid", to determine whether they match. For example, if it is determined that they do not match, it is determined that the candidate keywords of the scene "outdoors (man-made structure + natural landscape) " shown in Table 3 are not related to the photograph.

The keyword selecting section 450 then determines whether the photographed scene is "outdoors" or "indoors" on the basis of shooting condition information attached to the photograph, such as the brightness of the subject and whether a flashlight is used or not. For example, if the brightness is sufficiently high and a flash is not used, it is determined that the scene is "outdoors" and, accordingly, it is determined that the candidate keywords of the scene "indoors" shown in Table 3 are not related to the photograph. Consequently, the candidate keywords of the remaining scene "outdoors (natural landscape - land)" are chosen as the final keywords of the photograph.

In this way, by using various kinds of information attached to a photograph, keywords relating to the photograph can be determined quickly and precisely.

While a personal computer is used as the image analysis apparatus in the examples described above, the image analysis apparatus of the invention may be other type of apparatus such as a cellular phone.

While images are acquired from an external device through an input interface in the examples described above, the image acquiring section of the invention may acquire images recorded on recording media.

## Claims

1. An image analysis apparatus (400) comprising:
an acquiring section (410) which acquires an image;
an element analyzing section (420) which analyses the contents of the image acquired by the acquiring section (410) to extract a plurality of constituent elements that constitute the image;
a storage section (460) which associates and stores a plurality of words with each of a plurality of constituent elements;
a search section (420) which searches the words stored in the storage section (460) for words associated with a constituent element for each of the plurality of constituent elements extracted by the element analyzing section (420);
**characterized by**
a scene analysis section (430) which analyses an image acquired by the acquiring section (410) to determine the scene of the image; and
a selecting section (450) which selects words relating to the scene determined through analysis by the scene analyzing section (430) from among words found by the search section (420),
wherein the scene of the image is selected from a group comprising a scene taken during the daytime, outdoors (natural landscape and land), outdoors (natural landscape and man-made structure), outdoors (natural landscape and sea) and indoors.

2. The image analysis apparatus (400) according to claim 1, wherein the element analyzing section (420) extracts graphical elements as the constituent elements.

3. The image analysis apparatus (400) according to claim 1, wherein the element analyzing section (420) extracts a plurality of constituent elements,
the search section (420) searches for words for each of the plurality of constituent elements extracted by the element analyzing section (420), and
the image analysis apparatus (400) further comprises a selecting section (450) which determines that words that match the result of an image analysis are among the words found by the search section (420).

4. The image analysis apparatus (400) according to claim 1, wherein the acquiring section (410) acquires an image to which information is attached,
the element analyzing section (420) extracts a plurality of constituent elements,
the search section (420) searches for words for each of the plurality of constituent elements extracted by the element analyzing section (420), and
the image analysis apparatus (400) further comprises a selecting section (450) which selects words relating to the information attached to an image acquired by the acquiring section (410) among the words found by the search section (420).

5. An image analysis program storage medium (210) storing an images analysis program (300) executed on a computer (10) to construct on the computer (10):
an acquiring section (410) which acquires an image;
an element analyzing section (420) which analyses the contents of the image acquired by the acquiring section (410) to extract a plurality of constituent elements that constitute the image;
a search section (420) which searches the words stored in the a storage section (460) which associates and stores a plurality of words with each of a plurality of constituent elements for words associated with a constituent element for each of the plurality of constituent elements extracted by the element analyzing section (420);
**characterized in that** the image analysis program (300) is executed to further construct:
a scene analysis section (430) which analyses an image acquired by the acquiring section (410) to determine the scene of the image; and
a selecting section (450) which selects words relating to the scene determined through analysis by the scene analyzing section (430) from among words found by the search section (420),
wherein the scene of the image is selected from a group comprising a scene taken during the daytime, outdoors (natural landscape and land), outdoors (natural landscape and man-made structure), outdoors (natural landscape and sea) and indoors.

## Patentansprüche

1. Bildanalysevorrichtung (400), umfassend:
einen Erfassungsabschnitt (410), der ein Bild erfasst;
einen Elementanalysierabschnitt (420), der den Inhalt des von dem Erfassungsabschnitt (410) erfassten Bildes analysiert, um mehrere Bestandelemente, die das Bild ausmachen, zu extrahieren;
einen Speicherabschnitt (460), der mehrere Wörter mit jedem von mehreren Bestandselementen in Verbindung bringt und speichert;
einen Suchabschnitt (420), der die in dem Speicherabschnitt (460) abgespeicherten Wörter nach solchen Wörtern absucht, die mit einem Bestandselement in Verbindung stehen, und zwar für jedes der mehreren Bestandselemente, die von dem Elementanalysierabschnitt (420) extrahiert wurden;
**gekennzeichnet durch**
einen Szenenanalysierabschnitt (430), der ein von dem Erfassungsabschnitt (410) erfasstes Bild analysiert, um die Szene des Bilds zu bestimmen; und
einen Auswahlabschnitt (450), welcher Wörter in Bezug auf die durch von dem Szenenanalysierabschnitt (430) vorgenommene Analyse bestimmte Szene in Beziehung stehen, unter den von dem Suchabschnitt (420) aufgefundenen Wörtern auswählt,
wobei die Szene des Bildes aus einer Gruppe ausgewählt wird, welche umfasst: eine während der Tagzeit aufgenommene Szene, Außenszene (natürliche Landschaft und Land), Außenszene (natürliche Landschaft und Menschengemachte Struktur), Außenszene (natürliche Landschaft und See) und Innenszene.

2. Vorrichtung (400) nach Anspruch 1, bei der der Elementanalysierabschnitt (420) grafische Elemente als Bestandselemente extrahiert.

3. Vorrichtung (400) nach Anspruch 1, bei der der Elementanalysierabschnitt (420) mehrere Bestandselemente extrahiert,
der Suchabschnitt (420) nach Wörtern für jedes der von dem Elementanalysierabschnitt (420) extrahierten mehreren Bestandselemente sucht, und
die Bildanalysiervorrichtung (400) weiterhin einen Auswahlabschnitt (450) enthält, welcher Wörter bestimmt, die unter den von dem Suchabschnitt (420) aufgefundenen Wörtern mit dem Ergebnis der Bildanalyse übereinstimmen.

4. Vorrichtung nach Anspruch 1, bei der der Erfassungsabschnitt (410) ein Bild erfasst, an dem Information anhängt,
der Elementanalysierabschnitt (420) mehrere Bestandselemente extrahiert,
der Suchabschnitt (420) die Wörter für jedes der von dem Elementanalysierabschnitt (420) extrahierten Bestandselemente sucht, und
die Bildanalysiervorrichtung weiterhin einen Auswahlabschnitt (450) aufweist, der unter den von dem Suchabschnitt (420) aufgefundenen Wörtern solche Wörter auswählt, die in Beziehung stehen zu der an einem von dem Erfassungabschnitt (410) erfassten Bild anhängenden Information.

5. Bildanalyseprogramm-Speichermedium (210), das ein Bildanalyseprogramm (300) speichert, das auf einem Computer (10) ausgeführt wird, damit dieser fungiert als:
ein Erfassungsabschnitt (410), der ein Bild erfasst;
ein Elementanalysierabschnitt (420), der den Inhalt des von dem Erfassungsabschnitt (410) erfassten Bildes analysiert, um mehrere Bestandelemente, die das Bild ausmachen, zu extrahieren;
ein Speicherabschnitt (460), der mehrere Wörter mit jedem von mehreren Bestandselementen in Verbindung bringt und speichert;
ein Suchabschnitt (420), der die in dem Speicherabschnitt (460) abgespeicherten Wörter nach solchen Wörtern absucht, die mit einem Bestandselement in Verbindung stehen, und zwar für jedes der mehreren Bestandselemente, die von dem Elementanalysierabschnitt (420) extrahiert wurden;
**gekennzeichnet durch**
einen Szenenanalysierabschnitt (430), der ein von dem Erfassungsabschnitt (410) erfasstes Bild analysiert, um die Szene des Bilds zu bestimmen; und
einen Auswahlabschnitt (450), welcher Wörter in Bezug auf die durch von dem Szenenanalysierabschnitt (430) vorgenommene Analyse bestimmte Szene in Beziehung stehen, unter den von dem Suchabschnitt (420) aufgefundenen Wörtern auswählt,
wobei die Szene des Bildes aus einer Gruppe ausgewählt wird, welche umfasst: eine während der Tagzeit aufgenommene Szene, Außenszene (natürliche Landschaft und Land), Außenszene (natürliche Landschaft und Menschengemachte Struktur), Außenszene (natürliche Landschaft und See) und Innenszene.

## Revendications

1. Appareil d'analyse d'image (400), comprenant :
une section d'acquisition (410), laquelle acquiert une image ;
une section d'analyse d'élément (420), laquelle analyse le contenu de l'image acquise par la section d'acquisition (410) afin d'extraire une pluralité d'éléments constitutifs, lesquels constituent l'image ;
une section de stockage (460), laquelle associe et stocke une pluralité de mots avec chacun d'une pluralité d'éléments constitutifs ;
une section de recherche (420), laquelle recherche les mots stockés dans la section de stockage (460) quant à des mots associés à un élément constitutif pour chacun de la pluralité d'éléments constitutifs extraits par la section d'analyse d'élément (420) ;
**caractérisé par**
une section d'analyse de scène (430), laquelle analyse une image acquise par la section d'acquisition (410) afin de déterminer la scène de l'image, et
une section de sélection (450), laquelle sélectionne des mots liés à la scène déterminée par analyse par la section d'analyse de scène (430) parmi des mots trouvés par la section de recherche (420), et
dans lequel la scène de l'image est sélectionnée parmi un groupe comprenant une scène prise en journée, à l'extérieur (paysage naturel et campagne), à l'extérieur (paysage naturel et structure anthropique), à l'extérieur (paysage naturel et mer), et à l'intérieur.

2. Appareil d'analyse d'image (400) selon la revendication 1, dans lequel la section d'analyse d'élément (420) extrait des éléments graphiques comme éléments constitutifs.

3. Appareil d'analyse d'image (400) selon la revendication 1, dans lequel la section d'analyse d'élément (420) extrait une pluralité d'éléments constitutifs, la section de recherche (420) recherche quant à des mots pour chacun de la pluralité d'éléments constitutifs extraits par la section d'analyse d'élément (420), et l'appareil d'analyse d'image (400) comprend en outre une section de sélection (450), laquelle détermine que des mots correspondant au résultat d'une analyse d'image sont parmi les mots trouvés par la section de recherche (420).

4. Appareil d'analyse d'image (400) selon la revendication 1, dans lequel
la section d'acquisition (410) acquiert une image à laquelle des informations sont jointes ;
la section d'analyse d'élément (420) extrait une pluralité d'éléments constitutifs ;
la section de recherche (420) recherche quant à des mots pour chacun de la pluralité d'éléments constitutifs extraits par la section d'analyse d'élément (420), et
l'appareil d'analyse d'image (400) comprend en outre une section de sélection (450), laquelle sélectionne des mots liés aux informations jointes à une image acquise par la section d'acquisition (410) parmi les mots trouvés par la section de recherche (420).

5. Support de stockage pour programme d'analyse d'image (210) stockant un programme d'analyse d'images (300) exécuté sur un ordinateur (10) à construire sur l'ordinateur (10) :
une section d'acquisition (410), laquelle acquiert une image ;
une section d'analyse d'élément (420), laquelle analyse le contenu de l'image acquise par la section d'acquisition (410) afin d'extraire une pluralité d'éléments constitutifs, lesquels constituent l'image ;
une section de recherche (420), laquelle recherche les mots stockés dans la section de stockage (460) qui associe et stocke une pluralité de mots avec chacun d'une pluralité d'éléments constitutifs quant à des mots associés à un élément constitutif pour chacun de la pluralité d'éléments constitutifs extraits par la section d'analyse d'élément (420) ;
**caractérisé en ce que** le programme d'analyse d'images (300) est exécuté de manière à construire en outre :
une section d'analyse de scène (430), laquelle analyse une image acquise par la section d'acquisition (410) afin de déterminer la scène de l'image ;
une section de sélection (450), laquelle sélectionne des mots liés à la scène déterminée par analyse par la section d'analyse de scène (430) parmi des mots trouvés par la section de recherche (420), et
dans lequel la scène de l'image est sélectionnée parmi un groupe comprenant une scène prise en journée, à l'extérieur (paysage naturel et campagne), à l'extérieur (paysage naturel et structure anthropique), à l'extérieur (paysage naturel et mer), et à l'intérieur.
